(19) Europäisches Patentamt
European Patent Office
Office européen des brevets

(11) Publication number: 0 115 373 B1

(12) EUROPEAN PATENT SPECIFICATION

(45) Date of publication of patent specification: 05.12.90

(51) Int. Cl.[5]: C 08 L 59/02, C 08 L 33/08

(21) Application number: 84300014.2

(22) Date of filing: 03.01.84

# (54) Polyacetal moulding compositions with high impact resistance.

(30) Priority: 04.01.83 US 455624

(43) Date of publication of application:
08.08.84 Bulletin 84/32

(45) Publication of the grant of the patent:
05.12.90 Bulletin 90/49

(84) Designated Contracting States:
BE DE FR GB IT NL

(56) References cited:
DE-A-1 931 392
DE-B-1 669 857
DE-B-1 964 156
US-A-3 027 352
US-A-4 096 202

(73) Proprietor: CELANESE CORPORATION
1211 Avenue of the Americas
New York New York 10036 (US)

(72) Inventor: Natarajan, Kavilipalayam M.
3 Overhill Drive
North Brunswick New Jersey (US)

(74) Representative: De Minvielle-Devaux, Ian Benedict Peter et al
CARPMAELS & RANSFORD 43, Bloomsbury Square
London WC1A 2RA (GB)

EP 0 115 373 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to thermoplastic moulding compositions of high impact resistance based on oxymethylene polymers modified with a multiphase interpolymer comprising a cross-linked acrylic first phase and grafted thereon a rigid thermoplastic final phase.

Oxyalkylene polymers, specifically oxymethylene polymers having recurring $—CH_2O—$ units, have been known for many years. They may be prepared by the polymerisation of anhydrous formaldehyde or by the polymerisation of trioxane, a cyclic trimer of formaldehyde.

High molecular weight oxymethylene polymers have been prepared by polymerising trioxane in the presence of certain fluoride catalysts. They may also be prepared in high yields and at rapid reaction rates by the use of catalysts comprising boron fluoride co-ordination complexes with organic compounds, as described in U.S. Patent No: 2,989,506 of Donald E. Hudgin and Frank Berardinelli. Other methods of preparing oxymethylene polymers are described by Kern et al in *Angewandte Chemie,* 73 (6), 177—186 (March 21, 1961) and in Sittig, "Polyacetals: What You Should Know", *Petroleum Refiner,* 41, 11, 131—170 (November 1962). These include methods for preparing oxymethylene polymers which contain carbon-to-carbon bonds in the polymer chain and which are made by copolymerising trioxane with cyclic ethers, e.g. dioxane; lactones, e.g., beta-propiolactone; anhydrides, e.g., cyclic adipic anhydride; and ethylenically unsaturated compounds, e.g., styrene, vinyl acetate, vinyl methyl ketone and acrolein. Also contemplated are oxymethylene polymers the end groups of which are reacted of "capped" with, for example, ester or ether end groups. Typical capping agents are alkanoic anhydrides, e.g., acetic anhydride, which form ester end groups, and dialkyl ethers, e.g. dimethyl ether, which form ether end groups. Still other oxymethylene polymers, more particularly copolymers, which are adapted for use in producing the modified polymers of this invention are those which are prepared as described in U.S. Patent No: 3,027,352 of Walling et al, by copolymerising trioxane with various cyclic ethers having at least two adjacent carbon atoms, e.g. ethylene oxide, dioxolane and the like.

Oxymethylene polymers are highly crystalline and have excellent chemical and mechanical properties. Because of these properties, the polymers are suitable for use as engineering resins in a variety of applications. However, it would be very desirable to improve their impact resistance and toughness in order to broaden their field of use. Various methods intended to achieve such an improvement in the properties of polymers are known but the many efforts made so far have not fully achieved this objective in the case of oxymethylene polymers.

It is known that the impact resistance and toughness of a thermoplastic moulding resin can be improved by the incorporation of an elastomeric or rubbery substance. However, because of the high degree of crystallinity of oxymethylene polymers, few of the elastomeric or rubber substances are compatible with these polymers, and attempts to incorporate the elastomeric or rubbery substances into the oxymethylene polymers have not generally been successful. The elastomeric materials tend to segregate out from the oxymethylene polymer matrix, and difficulties in processing are encountered.

Rohm and Haas Company of Independence Mall West, Philadelphia, Pennsylvania is currently marketing a multi-phase composite interpolymer, under the designation Acryloid® KM-330, as an impact modifier for polyesters, polyvinyl chlorides and nylons. Such polymers are recognised by those skilled in the art to be generally much less crystalline than oxymethylene polymers and do not suffer from the problem of incompatibility with elastomers or rubbers.

U.S. Patent No: 4,096,202 of Farnham et al specifically discloses the use of a multiphase composite interpolymer as an impact modifier for polyalkylene terephthalate i.e. thermoplastic polyesters. The multiphase composite interpolymer is described as a cross-linked acrylic first stage containing a graft-linking monomer and a final rigid thermoplastic phase. According to Rohm and Haas Company, the multiphase composite polymer described in this Patent is designated commercially as Acryloid® KM-330 and is an impact modifier for polyvinyl chloride.

U.S. Patent No: 4,283,326 of Charles et al discloses the incorporation of mica and a multiphase composite polymer into glass fibre reinforced polyalkylene terephthalate resins to improve the impact strength and reduce warping.

U.S. Patent No: 3,749,755 of Bronstert et al discloses the addition of an elastomeric graft copolymer, having a glass transition temperature below −20°C., to polyoxymethylene resins to improve impact resistance. The elastomeric graft copolymer is obtained by polymerising one or more olefinically unsaturated monomers in the presence of a preformed polymer so that a substantial portion of the monomer is grafted onto the prepolymer molecule. The prepolymer is formed from an acrylic ester and an olefinic monomer with olefinic double bonds and may include other conventional monomers.

U.S. Patent No: 4,022,748 of Schlicting et al discloses a thermoplastic polyester resin with a rubber-elastic graft polymer as having excellent impact resistance even at relatively low temperatures.

U.S. Patent No: 3,668,274 of Owens et al discloses a carbonamide composition modified by a multiphase polymer with a first elastomeric phase and a final rigid thermoplastic with amine-reactive carboxylic acid groups grafted thereon. The modified carbonamide is then extrudable, blow-mouldable and injection-mouldable. Further, the shaped article has good solvent resistance and good vapour barrier properties.

U.S. Patent No: 3,591,659 of Brinkmann et al discloses the addition of acrylic, methacrylic, ethacrylic

polymers to thermoplastic polyesters to improve the impact strength without loss of abrasion resistance, solvent resistance or hardness.

The present invention provides a polyoxymethylene moulding composition capable of forming moulded articles which have both excellent impact resistance and other advantageous properties.

The invention provides a polyoxymethylene moulding composition capable of being moulded to form articles exhibiting high impact resistance which comprises an intimate blend of:

(a) an oxymethylene polymer; and

(b) from 1 to 30 percent by weight based on the total weight of the composition of a multiphase composite interpolymer comprising

(i) 25 to 95 percent by weight of a first elastomeric phase polymerised from a monomer system comprising up to 99.8 percent by weight of ($C_1$ to $C_6$) alkyl acrylate, 0.1 to 5 percent by weight of cross-linking monomer and 0.1 to 5 percent by weight of graft-linking monomer; and

(ii) 75 to 5 percent by weight of a final rigid thermoplastic phase polymerised in the presence of the elastomeric phase (i).

The present invention provides many advantages which will be evident from the following description. Among these advantages are the following:—

The present invention makes it possible to provide a polyoxymethylene moulding composition which is capable of being moulded to form articles having highly satisfactory impact resistance without encountering difficulties in dispersion of the impact modifier into the oxymethylene polymer matrix.

The present invention makes it possible to provide a polyoxymethylene moulding composition suitable for use as an engineering resin which can be easily and economically produced.

The present invention makes it possible to provide a polyoxymethylene moulding composition which is capable of being moulded to form structural articles having good colour, impact resistance and toughness together with good tensile strength and flexural modulus.

The Oxymethylene Polymer

The oxymethylene polymer to be used in accordance with this invention may be of two types: (a) an oxymethylene homopolymer or (b) an oxymethylene copolymer.

If the oxymethylene polymer is a homopolymer, it consists essentially of recurring $-OCH_2-$ units.

In the most preferred embodiment, the oxymethylene copolymer which is modified in accordance with the present invention is one which is known in the art and possesses a relatively high level of polymer crystallinity, i.e., approximately 70 to 80 percent. Such oxymethylene copolymers have repeating units which consist essentially of (a) $-OCH_2-$ groups interspersed with (b) groups represented by the general formula:

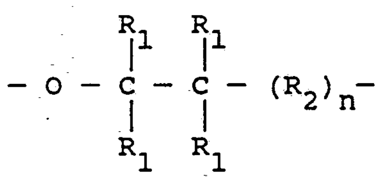

wherein each $R_1$ is selected from hydrogen, lower alkyl and halogen-substituted lower alkyl radicals, and $R_2$ is selected from methylene, oxymethylene, lower alkyl and haloalkyl-substituted methylene, and lower alkyl and haloalkyl-substituted oxymethyleneradicals, and n is an integer from zero to three. Each lower alkyl radical preferably has one or two carbon atoms.

The $-OCH_2-$ units of (a) preferably constitute from 85% to 99.9% of the recurring units. The units of (b) are incorporated into the copolymer during the step of copolymerisation by the opening of the ring of a cyclic ether having adjacent carbon atoms by the breaking of an oxygen-to-carbon bond.

Polymers of the desired structure may be prepared by polymerising trioxane together with 0.1 to 15 mole percent of a cyclic ether having at least two adjacent carbon atoms, preferably in the presence of a catalyst such as Lewis acid, e.g., $BF_3$, $PF_5$, etc. or other acids, e.g. $HClO_4$, 1% $H_2SO_4$, etc.

In general, the cyclic ethers employed in making the oxymethylene copolymer are those represented by the general formula

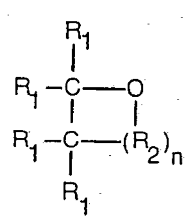

wherein each $R_1$ is selected from hydrogen, lower alkyl and halogen-substituted lower alkyl radicals, and $R_2$ is selected from methylene, oxymethylene, lower alkyl and haloalkyl-substituted methylene and lower alkyl

and haloalkyl-substituted oxymethylene radicals, and n is an integer from zero to three. Each lower alkyl radical preferably has one or two carbon atoms.

The preferred cyclic ethers used in the preparation of the oxymethylene copolymers are ethylene oxide and 1,3-dioxolane. Other cyclic ethers that may be employed include 1,3-dioxane, trimethylene oxide, 1,2-propylene oxide, 1,2-butylene oxide, 1,3-butylene oxide and 2,2-di-(chloromethyl)-1,3-propylene oxide.

The preferred catalyst used in preparing the oxymethylene copolymer is the aforementioned boron trifluoride as discussed in the previously-identified Walling et al Patent. Reference is made to this Patent for further information concerning the polymerisation conditions, amount of catalyst employed, etc.

The oxymethylene copolymers produced by copolymerising trioxane with the preferred cyclic ethers have a structure composed substantially of oxymethylene and oxyethylene groups in a ratio of from 6 to 1 to 1000 to 1.

In general, the oxymethylene copolymers that are modified to form the composition of this invention are thermoplastic materials having a melting point of at least 150°C., and normally are millable or processable at a temperature of about 200°C. They generally have a number average molecular weight of at least 10,000. The preferred oxymethylene polymers have an inherent viscosity of at least 1.0 (measured at 60°C. in a 0.1 weight percent solution in p-chlorophenol containing 2 weight percent of alpha-pinene).

The oxymethylene copolymer component of the composition of this invention preferably is an oxymethylene copolymer that has been previously stabilised to a substantial degree. Such stabilising technique may take the form of stabilisation by degradation of the molecular ends of the polymer chain to a point where a relatively stable carbon-to-carbon linkage exists at each end. For example, such degradation may be effected by hydrolysis as disclosed in our U.S. Patent No: 3,219,623.

If desired, the oxymethylene copolymer may be end-capped by techniques known to those skilled in the art. A preferred end-capping is accomplished by acetylation with acetic anhydride in the presence of sodium acetate catalyst.

The oxymethylene copolymer preferably incorporates the standard additives present in oxymethylene polymer moulding resins. For instance, a minor concentration of one or more antioxidants, chain-scission inhibitors, acid scavengers, lubricants, nucleating agents, pigments, fibres, etc. may also be present. A preferred oxymethylene copolymer is commercially available from Celanese Engineering Resins Company under the designation CELCON® acetal copolymer. (CELCON is a Trade Mark).

The Impact modifier

The impact modifier used in accordance with the invention is a multiphase composite interpolymer comprising 25 to 95 weight percent of a first elastomeric phase and 75 to 5 weight percent of a final rigid thermoplastic phase. One or more intermediate phases are optional, e.g., a middle stage polymerised from 75 to 100 percent by weight of styrene may be incorporated.

The first stage is polymerised utilising up to 99.8 weight percent $C_1$ to $C_6$ alkyl acrylate, generally resulting in an acrylic rubber core having a $T^g$ below 10°C., and cross-linked with 0.1 to 5 weight percent cross-linking monomer and further containing 0.1 to 5 weight percent graftlinking monomer. The preferred alkyl acrylate is butyl acrylate.

The cross-linking monomer is a polethylenically unsaturated monomer having a plurality of addition polymerisable reactive groups, all of which polymerise at substantially the same rate of reaction. Suitable cross-linking monomers include polyacrylic and methacrylic esters of polyols such as butylene diacrylate and butylene dimethacrylate, trimethylolpropane trimethacrylate; di- and trivinyl benzene, vinyl acrylate and vinylmethacrylate. The preferred cross-linking monomer is butylene diacrylate.

The graftlinking monomer is a polyethylenically unsaturated monomer having a plurality of addition polymerisable reactive groups, at least one of the reactive groups polymerising at a substantially different rate of polymerisation from at least one other of said reactive groups. The function of the graftlinking monomer is to provide a residual level of unsaturation in the elastomeric phase, particularly in the latter stages of polymerisation and, consequently, at or near the surface of the elastomeric particles. When the rigid thermoplastic phase is subsequently polymerised at the surface of the elastomer, the residual unsaturated addition polymerisable reactive groups contributed by the graftlinking monomer participate in the subsequent reaction so that at least a portion of the rigid phase is chemically attached to the surface of the elastomer. Among the effective graftlinking monomers are allyl groups containing monomers such as allyl esters of ethylenically unsaturated acids, e.g. allyl acrylate, allyl methacrylate, diallyl maleate, diallyl fumarate, diallyl itaconate, allyl acid maleate, allyl acid fumarate and allyl acid itaconate. Somewhat less preferred are the diallyl esters of polycarboxylic acids which do not contain polymerisable unsaturation. The preferred graftlinking monomers are allyl methacrylate and diallyl maleate.

The final stage can be polymerised from a monomer system comprising $C_1$ to $C_{16}$ alkyl methacrylate, styrene, acrylonitrile, alkyl acrylates, allyl methacrylate and diallyl methacrylate, as long as the overall $T^g$ is at least 20°C. Preferably the final stage monomer system is at least 50 weight percent of a $C_1$ to $C_4$ alkyl acrylate. It is further preferred that the final stage polymer be free of moieties which tend to degrade polyoxymethylenes, for example, an acid moiety.

A most preferred interpolymer has only two stages. The first stage, about 60 to 95 weight percent of the interpolymer, is polymerised from a monomer system comprising 95 to 99.8 weight percent butyl acrylate, 0.1 to 2.5 weight percent butylene diacrylate as the cross-linking agent and 0.1 to 2.5 weight percent allyl

methacrylate or diallyl maleate as the graftlinking monomer. The final stage of the interpolymer is polymerised from 5 to 40 weight percent methyl methacrylate.

The most preferred multiphase composite interpolymer is commercially available from Rohm and Haas and is designated as Acryloid® KM-330 (Trade Mark).

The impact modifier is used in suitable amounts of 1 to 30 weight percent into oxymethylene polymer. Below 1 weight percent, no significant improvement is observed. Above 30 weight percent, further improvements are not economically achieved. The improvement in impact resistance in oxymethylene polymers is especially significant with 2 to 10 weight percent Acryloid® KM-330. At this low level, the impact resistance can be improved without significantly changing any of the other key physical properties.

Processing Conditions

Acryloid® KM-330 is intimately blended with oxymethylene polymers by any convenient technique known to those skilled in the art which is capable of producing a substantially uniform dispersion of the particles throughout the polymer matrix. It is to be noted that in the blending or compounding process the shear rate employed should be below 5000 $sec.^{-1}$. In a preferred technique, the compounding is accomplished by the use of a Johnson $2\frac{1}{2}$" (6.35 cm) single screw extruder at approximately 190 to 200°C. The range of shear rate of this extruder is approximately 0—3000 $sec.^{-1}$. It has been found that high shear mixing is detrimental in the process. For example, using a twin screw extruder with a shear rate range of about 10,000 to 100,000 $sec.^{-1}$, the spherical particle structure of the multiphase interpolymer can be destroyed and the desired impact modification and processability are not achieved.

The multiphase interpolymers are provided in a concentration of 1 to 30 percent by weight, based upon the total weight of the composition, and preferably in a concentration of 1.5 to 10 percent by weight, based on the total weight of the composition. A composition which incorporates the multiphase interpolymer in a concentration of 1.5 to 10 percent by weight, based on the total weight of the composition, exhibits substantially improved impact resistance without showing any substantial decrease in tensile strength or flexural modulus.

The impact modified oxymethylene polymer composition of the present invention can be utilised to form moulded articles in accordance with standard moulding procedures commonly utilised with oxymethylene polymers. For instance, the composition can be moulded at 195—197°C. to form a three-dimensional article using standard equipment and moulding conditions.

It has been found unexpectedly that the multiphase interpolymer can be incorporated into the oxymethylene polymer matrix with no substantial difficulties in blending. However, the multiphase interpolymer must be incorporated into the oxymethylene polymer matrix with less shear mixing than would be expected. This turns out to be an advantage and translates into savings in energy and leads to a more economical process for manufacturing an impact modified oxymethylene polymer product.

The following Examples are presented as specific illustrations of the invention. It should be understood that the invention is not limited to the specific details of the Examples.

Examples 1 to 7

The oxymethylene polymer was a trioxane-ethylene oxide copolymer containing approximately 98 percent by weight of recurring $—OCH_2—$ groups and approximately 2 percent by weight of comonomer units having the formula $—OCH_2CH_2—$, derived from ethylene oxide. The oxymethylene copolymer was prepared as previously described herein and more specifically in U.S. Patent No: 3,027,352 of Walling et al, and was stabilised by hydrolysis of the ends of the polymer chains. The oxymethylene copolymer possessed a crystallinity of approximately 75 percent, average number molecular weight of approximately 35,000, an inherent viscosity (I.V.) of approximately 1.3 (measured at 60°C. in a 0.1 weight percent solution in p-chlorophenol containing 2 weight percent of alpha-pinene), a melting temperature of 165°C, and a melt index of approximately 9.0 g/10 min. when tested in accordance with ASTM-D-1238-57T. Included in the oxymethylene copolymer were 0.5 weight percent 2,2'-methylene-bis(4-methyl-6-t-butylphenol) antioxidant, 0.1 weight percent cyanoguanidine chain-scission inhibitor, 0.2 weight percent alkylene bisstearamide commercially available as Acrawax®C mould lubricant and 0.25 weight percent of a trioxane/ethylene oxide/butanediol diglycidyl ether terpolymer consisting of approximately 97.5 weight percent recurring $—OCH_2—$ groups, approximately 2.42 weight percent recurring $—OCH_2CH_2—$ groups and approximately 0.08 weight percent recurring units derived from butanediol diglycidyl ether. Included in the trioxane/ethylene oxide/butanediol diglycidyl ether terpolymer were 0.5 weight percent 2,2'-methylene-bis(4-methyl-6-t-butyl phenol) antioxidant and 0.1 weight percent calcium ricinoleate acid scavenging chain-scission inhibitor. (Acrawax® is a Trade Mark).

The multiphase interpolymer was obtained from Rohm and Haas Company under the designation of Acryloid® KM-330, with particle sizes in the range of 10 to 100 μm (microns).

The multiphase interpolymer was intimately blended with samples of the oxymethylene copolymer in various concentrations by use of a $2\frac{1}{2}$" (6.35 cm) Johnson single screw extruder with the polymer at approximately 193°C. Moulding pellets of the resin blend were produced wherein the multiphase interpolymer was present in concentrations of 1.5 weight percent (Example 1), 3 weight percent (Example 2), 5.0 weight percent (Example 3), 10.0 weight percent (Example 4), 15.0 weight percent (Example 5), 20.0 weight percent (Example 6) and 30.0 weight percent (Example 7).

A Control sample with no multiphase interpolymer as well as the blend with multiphase interpolymer, where then moulded to form standard bars in a Reed, 5 oz. moulding machine. The operating temperatures were as follows:

| Zone | Temperature °C. |
|---|---|
| Nozzle | 201.5° |
| Front | 201.5° |
| Centre | 201.5°. |
| Rear | 201.5° |
| Mould | 87.5° |

The injection pressure was 12,000 p.s.i.g. (82843 kPa), the hold pressure was approximately 75 p.s.i.g. (618.5 kPa) and the back pressure was about 0 p.s.i.g. (101 kPa). Processing of the blends was judged to be excellent. The moulded test bars were then tested for physical properties and the results are reported in Table I. The tensile strength and elongation values were determined in accordance with ASTM D-638, the flexural strength and flexural modulus values in accordance with ASTM D-790, the notched Izod and reversed notched Izod in accordance with ASTM D-256, the tensile impact strength in accordance with ASTM D-1822 and the final impact value in accordance with the standard Gardner Impact test.

TABLE I
Examples

| | Control | 1 | 2 | 3 | 4 | 5 | 6 | 7 |
|---|---|---|---|---|---|---|---|---|
| Weight % Multiphase Interpolymer | 0 | 1.5 | 3.0 | 5.0 | 10.0 | 15.0 | 20.6 | 30.0 |
| Tensile Strength (PSI) | 9,300 | 8,800 | 8,400 | 8,000 | 7,100 | 6,400 | 5,500 | 4,400 |
| 50.8 mm (2.0")/min. (kPa) | 64132 | 60684 | 57926 | 55167 | 48961 | 44133 | 37927 | 30342 |
| Elongation (Percent) | 43 | 60 | 45 | 86 | 79 | 96.5 | — | 67 |
| Flexural Strength (PSI × $10^3$) | 11.8 | 11.3 | 11.0 | 10.8 | 9.8 | 9.3 | 8.1 | 6.6 |
| (MPa) | 81.4 | 77.9 | 75.9 | 74.5 | 67.6 | 64.1 | 55.9 | 45.5 |
| Flexural Modulus (PSI × $10^5$) | 3.45 | 3.35 | 3.27 | 3.19 | 2.83 | 2.68 | 2.36 | 1.99 |
| (GPa) | 2.38 | 2.31 | 2.25 | 2.20 | 1.95 | 1.85 | 1.63 | 1.37 |
| Notched Izod (ft. lbs./in) | 1.12 | 1.20 | 1.25 | 1.54 | 1.80 | 2.00 | 2.12 | 2.53 |
| notch (N) | 59.8 | 64.1 | 66.7 | 82.2 | 96.1 | 106.8 | 113.2 | 135.1 |
| Reverse Notched Izod (ft. lb./in) | 29 | 30.7 | 34.2 | 38.8 | 36.2 | 34.6 | — | 34 |
| notch (kN) | 1.55 | 1.64 | 1.83 | 2.07 | 1.93 | 1.85 | — | 1.82 |
| | Control | 1 | 2 | 3 | 4 | 5 | 6 | 7 |
| Tensile Impact (ft. lb./sq. in.) | 109 | 125 | 139 | 149 | 146 | 158 | 190 | 188 |
| (kN/m) | 229 | 263 | 292 | 313 | 307 | 332 | 399 | 395 |
| Gardner Impact (in.lbs.) | 22—24 | 36—38 | 48—52 | 76—80 | 128—136 | 152—156 | 152—156 | 152—160 |
| (J) | 2.5—2.7 | 4.1—4.3 | 5.4—5.9 | 8.6—9.0 | 14.5—15.4 | 17.2—17.6 | 17.2—17.6 | 17.2—18.1 |

Examples 8 to 13

Another oxymethylene polymer was also blended with the multiphase interpolymer. This oxymethylene polymer was a trioxane-ethylene oxide copolymer containing approximately two percent by weight of comonomer units derived from ethylene oxide having the formula $—OCH_2CH_2—$, prepared as previously described and stabilised by hydrolysis of the ends of the polymer chains. The copolymer possessed a crystallinity of approximately 75 percent, average number molecular weight of approximately 40,000—45,000, an I.V. of approximately 1.7, a melting temperature of 167°C, and a melt index of approximately 2.5 g/10 min. when tested in accordance with ASTM 1238—57T. Included in the oxymethylene copolymer were 0.5 weight percent 2,2'-methylene-bis(4-methyl-6-t-butyl phenol) antioxidant, 0.1 weight percent cyanoguanidine chain-scission inhibitor, 0.2 weight percent Acrawax® C mould lubricant.

The multiphase interpolymer was intimately blended with samples of the oxymethylene copolymer in concentrations of 1.5 weight percent (Example 8), 3.0 weight percent (Example 9), 5.0 weight percent (Example 10), 10.0 weight percent (Example 11), 20.0 weight percent (Example 12) and 30.0 weight percent (Example 13). A 2½" (6.35 cm) Johnson single screw extruder was used with the mixture being blended at approximately 193°C.

A control sample with no multiphase interpolymer together with Examples 8—13 were again moulded in a Reed, 5 oz. moulding machine using the same conditions described hereinabove. The physical properties of the moulded test bars were measured and the results reported in Table II.

TABLE II
Examples

| | Control | 8 | 9 | 10 | 11 | 12 | 13 |
|---|---|---|---|---|---|---|---|
| Weight % Multiphase Interpolymer | 0 | 1.5 | 3.0 | 5.0 | 10.0 | 20.0 | 30.0 |
| Tensile Strength (PSI) 50.8 mm (2.0 in.)/min. | 8,700<br>59994 | 8,500<br>58615 | 8,400<br>57926 | 8,000<br>55167 | 7,000<br>48272 | 5,500<br>37928 | 4,400<br>30342 |
| Elongation (Percent) | 36 | 40 | 41 | 37 | 50 | 99 | 135 |
| Flexural Strength (PSI × $10^3$) | 11.0 | 10.8 | 11.1 | 11.0 | 9.9 | 8.1 | 6.3 |
| (MPa) | 75.9 | 74.5 | 76.5 | 75.9 | 68.3 | 55.9 | 43.4 |
| Flexural Modulus (PSI × $10^5$) (GPa) | 3.26<br>2.25 | 3.26<br>2.25 | 3.28<br>2.26 | 3.29<br>2.27 | 2.97<br>2.05 | 2.44<br>1.68 | 1.92<br>1.32 |
| Notched Izod (ft. lbs./in. notch) (N) | 1.25<br>66.7 | 1.28<br>68.3 | 1.61<br>86.0 | 1.61<br>86.0 | 2.00<br>106.8 | 2.52<br>134.5 | 3.2<br>170.8 |
| Reverse Notched Izod (ft.lbs./in notch) (kN) | 41<br>2.19 | 47<br>2.51 | 51<br>2.72 | 42<br>2.24 | —<br>— | —<br>— | |
| Tensile Impact (ft.lbs./sq.in.) | 182<br>383 | 205<br>431 | 200<br>420 | 220<br>462 | 224<br>470 | 266<br>559 | 247<br>519 |
| Gardner Impact (in.lbs.) | 12—14<br>1.4—1.6 | 28—30<br>3.2—3.4 | 34—36<br>3.8—4.1 | 60—62<br>6.8—7.0 | 116—120<br>13.1—13.6 | 144<br>16.3 | 190<br>21.5 |

Examples 14 to 19

The oxymethylene polymer is a homopolymer consisting of recurring $—OCH_2—$ units with minor quantities of alpha-pinene as a stabiliser, as well as small amounts of thermal stabiliser, antioxidants, internal lubricant and nucleating agent.

Intimate blends of the oxymethylene homopolymer and the multiphase interpolymer are formed and moulded as heretofore described with respect to Examples 1—7. Moulding pellets of the multiphase interpolymer modified polyoxymethylene are produced wherein the multiphase interpolymer is present in concentrations of 1.5 weight percent (Example 14), 3.0 weight percent (Example 15), 5.0 weight percent (Example 16), 10.0 weight percent (Example 17), 20.0 weight percent (Example 18) and 30.0 weight percent (Example 19). Superior impact strength is observed.

It will be noted that the impact values for notched Izod and Gardner impact increased with increasing concentration of the multiphase interpolymer. It is to be particularly noted that at lower levels of concentratoin of the multiphase interpolymer, the increase in Gardner impact is quite significant (from

about 2 times as high at 1.5 weight percent up to 5 times as high at 5.0 weight percent), yet there does not appear to be significant loss of other key physical properties. Further, all samples processed excellently.

**Claims**

1. A mouldable high impact resistance modified polyoxymethylene blend comprising:

(a) from 70 to 99 percent by weight, based on the total weight of the composition, of an oxymethylene polymer; and

(b) from 30 to 1 percent by weight, based on the total weight of the composition, of a multiphase interpolymer comprising:

(i) from 25 to 95 percent, by weight based on the total weight of the interpolymer, of a first elastomeric phase polymerised from a monomer system comprising up to 99.8 percent by weight, based on the first elastomeric phase, of a $C_1$ to $C_6$ alkyl acrylate, from 0.1 to 5 percent by weight of a cross-linking monomer, which is a polyethylenically unsaturated monomer, with a plurality of addition polymerisable reactive groups and from 0.1 to 5 percent by weight of a graft-linking monomer having a plurality of addition polymerisable reactive groups; and

(ii) from 75 to 5 percent by weight, based on the total weight of the interpolymer, of a final rigid thermoplastic phase polymerised in the presence of the elastomeric phase.

2. The impact modified polyoxymethylene composition according to claim 1 wherein the oxymethylene polymer is a homopolymer consisting essentially of recurring $—OCH_2—$ groups.

3. The impact modified polyoxymethylene moulding composition according to claim 2 wherein the multiphase interpolymer forms from 3 to 5 percent, by weight, of the total weight of the composition.

4. The impact modified polyoxymethylene composition according to any of claims 1—3 wherein the multiphase interpolymer further comprises an intermediate phase polymerised from 75 to 100 percent by weight of styrene.

5. The impact modified polyoxymethylene composition according to any of claims 1—4 wherein the cross-linking monomer is selected from butylene diacrylate, butylene dimethylacrylate, trimethylolpropane trimethacrylate, divinyl benzene, vinyl acrylate and vinyl methacrylate.

6. The impact modified polyoxymethylene composition according to any of claims 1—5 wherein the graftlinking monomer is selected from the following allyl group containing monomers: allyl acrylate, allyl methacrylate, diaallyl maleate, diallyl fumarate, diallyl itaconate, allyl acid maleate, allyl acid fumarate and allyl acid itaconate.

7. The impact modified polyoxymethylene moulding composition according to claim 6 wherein the multiphase interpolymer comprises

(i) from 60 to 95 percent by weight, based on the total weight of the interpolymer, of a first elastomeric phase polymerised from a monomer system comprising from 95 to 99.8 percent by weight, based on the total weight of the elastomeric phase, of butyl acrylate, from 0.1 to 2.5 percent by weight, based on the total weight of the elastomeric phase, of butylene diacrylate as the cross-linking agent and from 0.1 to 2.5 percent by weight, based on the total weight of the elastomeric phase, of allyl methacrylate as the graft-linking monomer; and

(ii) from 5 to 40 percent by weight, based on the total weight of the interpolymer, of methyl methacrylate as the final rigid thermoplastic phase.

8. The impact modified polyoxymethylene compositions according to any of claims 1—7 wherein the multiphase interpolymer forms from 1 to 5 percent, by weight, of the total weight of the composition.

9. The impact modified polyoxymethylene composition according to any of claims 1—7 wherein the oxymethylene polymer is an oxymethylene copolymer comprising

(a) 85 to about 99.9 percent by weight, based on the weight of the copolymer, of recurring $—OCH_2—$ groups interspersed with groups of the formula:

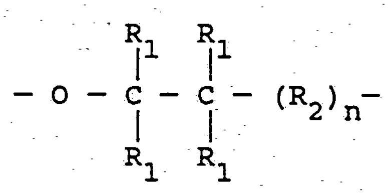

wherein each $R_1$ is selected from hydrogen, lower alkyl and halogen-substituted lower alkyl radicals, each $R_2$ is selected from methylene, oxymethylene, lower alkyl and haloalkyl-substituted oxymethylene radicals and n is an integer from 0 to 3, each lower alkyl radical having 1 or 2 carbon atoms; said

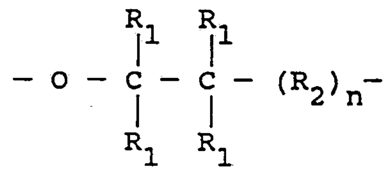

groups being incorporated during the step of copolymerisation, to produce said copolymer by the opening of a cyclic ether having adjacent carbon atoms by the breaking of an oxygen to carbon bond, said copolymer having an average number molecular weight of at least 10,000 and a melting point of at least 150°C.

10. A method of improving the impact resistance of polyoxymethylene compositions by compounding in an extruder with a shear rate of less than 5000 sec.$^{-1}$, a mixture comprising an oxymethylene polymer and a multiphase interpolymer as defined in any of claims 1—8.

11. A method according to claim 10 wherein the shear rate range of the extruder is from approximately 0 to 3000 sec.$^{-1}$.

12. A method according to claim 10 or 11 wherein the extruder is a $2\frac{1}{2}$" (6.35 cm) Johnson single screw extruder.

**Patentansprüche**

1. Formbares, hochschlagfest gemachtes Polyoxymethylen-Gemisch, umfassend

(a) 70 bis 99 Gew.-%, bezogen auf das Gesamt-Gewicht der Zusammensetzung, eines Oxymethylen-Polymers, und

(b) 30 bis 1 Gew.-%, bezogen auf das Gesamt-Gewicht der Zusammensetzung, eines mehrphasigen Interpolymers, umfassend

(i) 25 bis 95 Gew.-%, bezogen auf das Gesamt-Gewicht des Interpolymers, einer ersten elastomeren Phase, die aus einem Monomer-System polymerisiert ist, das bis zu 99,8 Gew.-%, bezogen auf die erste elastomere Phase, eines $C_1$- bis $C_6$-Alkylacrylats, 0,1 bis 5 Gew.-% eines vernetzenden Monomers, das ein polyethylenisch ungesättigtes Monomer mit einer Mehrzahl additionspolymerisierbarer reaktionsfähiger Gruppen ist, und 0,1 bis 5 Gew.-% eines pfropfvernetzenden Monomers mit einer Mehrzahl additionspolymerisierbarer reaktionsfähiger Gruppen umfaßt, und

(ii) 75 bis 5 Gew.-%, bezogen auf das Gesamt-Gewicht des Interpolymers, einer abschließenden steifen thermoplastischen Phase, die in Gegenwart der elastomeren Phase polymerisiert ist.

2. Schlagfest gemachte Polyoxymethylen-Zusammensetzung nach Anspruch 1, worin das Oxymethylen-Polymer ein im wesentlichen aus wiederkehrenden —$OCH_2$-Gruppen bestehendes Homopolymer ist.

3. Schlagfest gemachte Polyoxymethylen-Formmasse nach Anspruch 2, worin das mehrphasige Interpolymer 3 bis 5 Gew.-%, bezogen auf das Gesamt-Gewicht der Zusammensetzung, bildet.

4. Schlagfest gemachte Polyoxymethylen-Zusammensetzung nach irgendeinem der Ansprüche 1 bis 3, worin das mehr-phasige Interpolymer eine Zwischenphase umfaßt, die aus 75 bis 100 Gew.-% Styrol polymerisiert ist.

5. Schlagfest gemachte Polyoxymethylen-Zusammensetzung nach irgendeinem der Ansprüche 1 bis 4, worin das vernetzende Monomer aus Butylendiacrylat, Butylendimethylacrylate, Trimethylolpropantrimethacrylat, Divinylbenzol, Vinylacrylat und Vinylmethacrylat ausgewählt ist.

6. Schlagfest gemachte Polyoxymethylen-Zusammensetzung nach irgendeinem der Ansprüche 1 bis 5, worin das pfropfvernetzende Monomer aus den folgenden, Allyl-Gruppen enthaltenden Monomeren ausgewählt ist: Allylacrylat, Allylmethacrylat, Diallylmaleat, Diallylfumarat, Diallylitaconat, Allylsäuremaleat, Allylsäurefumarat und Allylsäureitaconat.

7. Schlagfest gemachte Polyoxymethylen-Formmasse nach Anspruch 6, worin das mehrphasige Interpolymer

(i) 60 bis 95 Gew.-%, bezogen auf das Gesamt-Gewicht des Interpolymers, einer ersten elastomeren Phase, die aus einem Monomer-System polymerisiert ist, das 95 bis 99,8 Gew.-%, bezogen auf das Gesamt-Gewicht der elastomeren Phase, Butylacrylat, 0,1 bis 2,5 Gew.-%, bezogen auf das Gesamt-Gewicht der elastomeren Phase, Butyldiacrylat als vernetzendes Mittel und 0,1 bis 2,5 Gew.-%, bezogen auf das Gesamt-Gewicht der elastomeren Phase, Allylmethacrylat als pfropfvernetzendes Monomer und

(ii) 5 bis 40 Gew.-%, bezogen auf das Gesamt-Gewicht des Interpolymers, Methylmethacrylat als abschließende steife thermoplastischen Phase umfaßt.

8. Schlagfest gemachte Polyoxymethylen-Zusammensetzungen nach irgendeinem der Ansprüche 1 bis 7, worin das mehrphasige Interpolymer 1 bis 5 Gew.-%, bezogen auf das Gesamt-Gewicht der Zusammensetzung, bildet.

9. Schlagfest gemachte Polyoxymethylen-Zusammensetzung nach irgendeinem der Ansprüche 1 bis 7, worin das Oxymethylen-Polymer ein Oxymethylen-Copolymer ist, das

(a) 85 bis etwa 99,9 Gew.-%, bezogen auf das Gesamt-Gewicht des Copolymers, wiederkehrende —$OCH_2$— Gruppen, die mit Gruppen der Formel

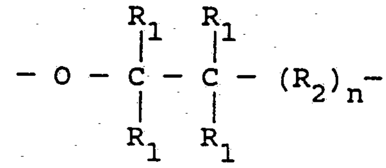

durchsetzt sind, worin

$R_1$ aus Wasserstoff, Niederalkyl- und halogen-substituierten Niederalkyl-Resten ausgewählt ist,

$R_2$ jeweils aus Methylen-, Oxymethylen-, niederalkyl- und halogensubstituierten Oxymethylen-Resten ausgewählt ist und

n eine ganze Zahl von 0 bis 3 ist, wobei jeder Niederalkyl-rest 1 oder 2 Kohlenstoff-Atome besitzt; wobei jede Gruppe

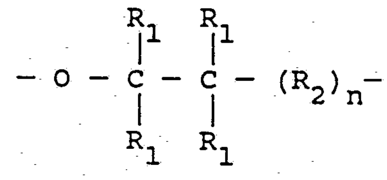

während des Schrittes der Copolymerisation eingebaut ist, worin das Copolymer durch Öffnen eines cyclischen Ethers mit benachbarten Kohlenstoff-Atomen durch Aufbrechen einer Sauerstoff-Kohlenstoff-Bindung erzeugt wird und das Copolymer ein Zahlenmittel des Molekulargewichts von wenigstens 10 000 und einen Schmelzpunkt von wenigstens 150°C besitzt.

10. Verfahren zur Verbesserung der Schlagzähigkeit von Polyoxymethylen-Zusammensetzungen durch Kompoundieren einer Mischung, umfassend ein Oxymethylen-Polymer und ein mehrphasiges Interpolymer, wie es in einem der Ansprüche 1 bis 8 definiert ist, in einem Extruder mit einer Scherrate von weniger als 5000 $s^{-1}$.

11. Verfahren nach Anspruch 10, worin der Bereich der Scherrate des Extruders etwa 0 bis 3000 $s^{-1}$ beträgt.

12. Verfahren nach Anspruch 10 oder 11, worin der Extruder ein 2½" (6,35 cm) Johnson-Einzelschnecken-Extruder ist.

**Revendications**

1. Mélange moulable de polyoxyméthylène modifié à haute résilience au choc, comprenant:

(a) de 70 à 99 pour cent en poids, sur la base du poids total de la composition, d'un polymère d'oxyméthylène; et

(b) de 30 à 1 pour cent en poids, sur la base du poids total de la composition, d'un copolymère polyphasique comprenant:

(i) de 25 à 95 pour cent, en poids, sur la base du poids total du copolymère, d'une première phase élastomère polymérisée à partir d'un système monomère comprenant jusqu'à 99,8 pour cent en poids, sur la base de la première phase élastomère, d'un alkyl acrylate en $C_1$ à $C_6$, de 0,1 à 5 pour cent en poids d'un monomère de réticulation, qui est un monomère insaturé de manière polyéthylénique, avec une pluralité de groupements réactifs polymérisables d'addition et de 0,1 à 5 pour cent en poids d'un monomère de liaison par greffe ayant une pluralité de groupements réactifs polymérisables d'addition; et

(ii) de 75 à 5 pour cent en poids, sur la base du poids total du copolymère, d'une phase finale thermoplastique rigide polymérisée en présence de la phase élastomère.

2. Composition de polyoxyméthylène modifiée au choc selon la revendication 1, où le polymère d'oxyméthylène est un homopolymère consistant essentiellement en groupements récurrents $-OCH_2-$.

3. Composition à mouler de polyoxyméthylène modifiée au choc selon la revendication 2, où le copolymère polyphasique forme de 3 à 5 pour cent, en poids, du poids total de la composition.

4. Composition de polyoxyméthylène modifiée au choc selon l'une quelconque des revendications 1 à 3, où le copolymère polyphasique comprend de plus une phase intermédiaire polymérisée de 75 à 100 pour cent en poids de styrène.

5. Composition de polyoxyméthylène modifiée au choc selon l'une quelconque des revendications 1 à 4, où le monomère de réticulation est sélectionné dans le grupe consistant en butylène diacrylate, butylène diméthylacrylate, triméthylolpropane triméthacrylate, divinyl benzène, vinyl acrylate et vinyl méthacrylate.

6. Composition de polyoxyméthylène modifiée au choc selon l'une quelconque des revendications 1 à 5, où le monomère de liaison par greffe est sélectionné parmi les monomères contenant un groupement allyle suivants: allyl acrylate, allyl méthacrylate, diallyl maléate, diallyl fumarate, diallyl itaconate, maléate d'acide allylique, fumarate d'acide allylique et itaconate d'acide allylique.

7. Composition à mouler de polyoxyméthylène modifiée au choc selon la revendication 6, où le copolymère polyphasique comprend:

(i) de 60 à 95 pour cent en poids, sur la base du poids total de copolymère, d'une première phase élastomère polymérisée à partir d'un système monomère comprenant de 95 à 99,8 pour cent en poids, sur la base du poids total de la phase élastomère, de butyl acrylate, de 0,1 à 2,5 pour cent en poids, sur la base du poids total de la phase élastomère, de butylène diacrylate comme agent de réticulation et de 0,1 à 2,5 pour cent en poids, sur la base du poids total de la phase élastomère, de l'allyl méthacrylate comme monomère de liaison par greffe; et

(ii) de 5 à 40 pour cent en poids, sur la base du poids total de copolymère, de méthyl méthacrylate comme phase finale thermoplastique rigide.

8. Compositions de polyoxyméthylène modifiées au choc selon l'une quelconque des revendications 1 à 7, où le copolymère polyphasique forme de 1 à 5 pour cent en poids, du poids total de la composition.

9. Composition de polyoxyméthylène modifiée au choc selon l'une quelconque des revendications 1 à 7, où le polymère d'oxyméthylène est un copolymère d'oxyméthylène comprenant:

(a) de 85 à environ 99,9 pour cent en poids, sur la base du poids de copolymère, de groupements récurrents —$OCH_2$— espacés par des groupements de formule:

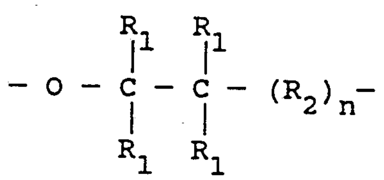

où chaque $R_1$ est sélectionné dans le groupe consistant en hydrogène, alkyle inférieur et radicaux alkyles inférieurs substitués par un halogène, chaque $R_2$ est sélectionné dans le groupe consistant en méthylène, oxyméthylène, radicaux oxyméthylènes substitués par un alkyle inférieur et un haloalkyle, et n est un nombre entier de 0 à 3, chaque radical alkyle inférieur ayant 1 ou 2 atomes de carbone; lesdits groupements

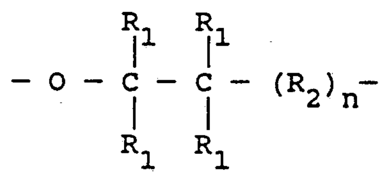

étant incorporés au cours de l'étape de copolymérisation, pour produire le copolymère précité en ouvrant un éther cyclique ayant des atomes de carbone adjacents en cassant une liaison oxygène-carbone, le copolymère précité ayant un poids moléculaire moyen d'au moins 10 000 et un point de fusion d'au moins 150°C.

10. Procédé pour améliorer la résilience au choc des compositions de polyoxyméthylène en mélangeant dans un extruder avec une vitesse de cisaillement inférieure à 5000 $sec.^{-1}$, un mélange comprenant un polymère d'oxyméthylène et un copolymère polyphasique, tel que défini dans l'une quelconque des revendications 1 à 8.

11. Procédé selon la revendication 10, où l'intervalle de vitesse de cisaillement de l'extrudeur est approximativement de 0 à 3000 $sec.^{-1}$.

12. Procédé selon la revendication 10 ou 11, où l'extruder est un extrudeur à vis unique de $2\frac{1}{2}$" (6,35 cm) de Johnson.